# EUROPÄISCHE PATENTSCHRIFT

(11) **EP 2 013 515 B1**
(45) Veröffentlichungstag und Bekanntmachung des Hinweises auf die Patenterteilung: **21.10.2009**
(21) Anmeldenummer: 06829745.6
(22) Anmeldetag: 10.12.2006
(51) Int. Cl.: F16H 7/08, F16H 7/12

(54) **KETTENSPANNER MIT DECKELELEMENT**
CHAIN TENSIONER WITH COVER ELEMENT
TENDEUR DE CHAINE AVEC ELEMENT DE COUVERCLE

(30) Priorität: 28.04.2006 DE 202006006861 U
(43) Veröffentlichungstag der Anmeldung: 14.01.2009
(73) Patentinhaber: IWIS Motorsysteme GmbH & Co. KG, 81369 München (DE)
(72) Erfinder: AURNHAMMER, Markus, 81549 München (DE); BAUER, Christian, 80993 München (DE); PERISSINOTTO, Renzo, 85221 Dachau (DE); LEDERER, Tobias, 80687 München (DE); HEINRICH, Dag, 82377 Penzing (DE)
(74) Vertreter: Grünecker, Kinkeldey, Stockmair & Schwanhäusser Anwaltssozietät
(86) Internationale Anmeldenummer: PCT/EP2006/012263
(87) Internationale Veröffentlichungsnummer: WO 2007/124780

(56) Entgegenhaltungen:
- EP-A2- 1 067 314
- EP-A2- 1 348 887
- DE-U1- 20 119 200
- US-A- 5 304 099
- US-A1- 2001 041 635

## Beschreibung

Die vorliegende Erfindung betrifft eine Spannvorrichtung gemäß dem Oberbegriff des Patentanspruchs 1.

Eine entsprechende Spannvorrichtung ist aus dem Dokument DE 2011920041 bekannt.

Derartige Spannvorrichtungen sind vielfältig in der Technik im Einsatz. Zum Beispiel werden Steuerketten bei einem Verbrennungsmotor mittels einer Spannschiene gespannt. Die Spannkraft wird hierbei über einen Kettenspanner aufgebracht, der auf einen dafür geeignet ausgestalteten Bereich der Spannschiene aufdrückt. Der Kettenspanner weist ein mit dem Motorblock verbundenes Gehäuse auf, in dem ein Spannkolben längs beweglich geführt ist. Das Kettenspannergehäuse steht mit der Ölversorgung des Motors in Verbindung, so dass eine an der Rückseite des Spannkolbens im Gehäuse ausgebildete Öldämpfungskammer mit Öl versorgt wird. Die Spannkraft des Kolbens selbst wird mittels einer in der Öldämpfungskammer angeordneten Druckfeder oder hydraulisch erzeugt. Der Spannkolben wird aufgrund der vorherrschenden Druckkräfte bevorzugt aus einem Stahlwerkstoff hergestellt, während das Gehäuse aus Aluminiumdruckguss besteht. Es gibt jedoch auch Bauformen, in denen eine Stahlführungshülse für den Spannkolben von einem Kunststoffgehäuse aus Thermoplast umspritzt wird.

Die bekannten Spannvorrichtungen haben sich in der Praxis bewährt, es bestehen jedoch weiterhin Bestrebungen, diese weiter zu verbessern, insbesondere die Haltbarkeit zu erhöhen, wobei auch die Kosten zur Herstellung nicht steigen sollen. Insbesondere hat es sich herausgestellt, dass hierbei auch der Kontaktbereich zwischen Spannschiene und Spannkolben mit berücksichtigt werden muss.

Diese Aufgabe wird durch die Merkmale des Patentanspruchs 1 gelöst.

Da die Stirnfläche des Spannkolbens mit einem gesonderten Element verbindbar ist, das heißt einem Deckelelement, welches mit der Spannschiene in Kontakt steht, ist es möglich, dieses im Betrieb einem starken Verschleiß ausgesetzten Element einfach zu ersetzen, ohne dass die komplette Spannvorrichtung ausgetauscht werden muss. Gleichermaßen ist es möglich, unterschiedliche Materialien für das Deckelelement und den Spannkolben einzusetzen, um hier spezielle Eigenschaften im Betrieb zu erzielen.

Vorteilhafterweise kann das Deckelelement des Spannkolbens aus einem Kunststoff hergestellt sein. In der Praxis hat sich herausgestellt, dass durch Einsatz eines Deckelelementes aus Kunststoff und das dadurch erzielte Aufeinandertreffen eines Kontaktpartners aus Metall, das heißt der Spannschiene, und eines Kontaktpartners aus Kunststoff, das heißt das Deckelelement, bessere tribologische Eigenschaften erzielt werden können. Insbesondere ist es möglich, den bisher auftretenden Verschleiß des Kolbenkontaktpunktes an der Spannschiene und das daraus resultierende Eingraben des Kolbens in die Schiene zu verhindern. Auf diese Weise ist es möglich, den Verschleiß der Spannvorrichtung deutlich zu reduzieren und somit die Kosten auf Dauer zu verringern. Der Einsatz eines Kunststoffes hat sich als besonders vorteilhaft erwiesen, da dieser gut bearbeitet werden kann, und je nach Einsatz und den gewünschten Eigenschaften entsprechend ausgewählt werden kann.

Gemäß einer bevorzugten Ausführungsform kann das Deckelelement aus einem Thermoplast, insbesondere einem Polyamid bestehen. Deckelelemente aus einem Thermoplast haben sich als besonders geeignet für die speziellen Anforderungen in einem Verbrennungsmotor erwiesen. Hierbei zeichnet sich insbesondere Polyamid durch besonders vorteilhafte Eigenschaften aus. Ein entsprechendes Deckelelement ist kostengünstig zu produzieren und einfach mit dem Spannkolben zu verbinden.

Vorteilhafterweise kann der Spannkolben aus einem Metall hergestellt sein. Aus Metall gefertigte Spannkolben sind seit langer Zeit im Einsatz und haben sich hinsichtlich der Haltbarkeit bewährt. Die Verbindung zwischen dem Spannkolben aus Metall und dem Deckelelement aus Kunststoff kann einfach hergestellt werden und führt zu keinerlei Schwierigkeiten hinsichtlich der Haltbarkeit des zusammengesetzten Spannkolbens.

Gemäß einer noch weiteren bevorzugten Ausführungsform kann die Spannschiene zumindestens in dem Bereich, der mit der Andrückfläche im Eingriff steht, aus einem metallischen Werkstoff bestehen. Entsprechende Spannschienen haben sich im Einsatz bewährt und sind Fachleuten auf dem Gebiet bekannt. Die vorliegende Erfindung ist jedoch nicht nur auf Spannschienen aus Metall beschränkt, sonders kann auch vorteilhaft in Kombination mit einer Spannschiene aus einem anderen Material, z.B. Kunststoff eingesetzt werden.

Gemäß noch einer weiteren bevorzugten Ausführungsform der vorliegenden Erfindung kann eine in dem oberen Bereich des Spannkolbens ausgebildete und in der Stirnfläche mündende Entlüftungsöffnung mit einer sich durch das Deckelelement und in der Andrückfläche desselben mündenden Durchgangsöffnung in Verbindung stehen. Hierdurch wird sichergestellt, dass eine kontinuierliche Entlüftungsöffnung vorhanden ist, auch wenn der Spannkolben mit dem Deckelelement verbunden ist, um so die kontinuierliche Entlüftung zu gewährleisten.

Vorteilhafterweise ist der Durchmesser der Durchgangsöffnung des Deckelelementes größer als der Durchmesser der Entlüftungsöffnung des Spannkolbens. Hierdurch wird sichergestellt, dass eine durchgängige Entlüftungsöffnung gebildet wird, auch wenn eine der Enttüftungsöffnungen nicht richtig ausgebildet ist.

Vorteilhafterweise kann die Stirnfläche des Spannkolbens mit einer kreisförmigen Ausnehmung zur Aufnahme des Deckelelementes ausgebildet sein. Diese Ausführungsform stellt eine besonders einfache Möglichkeit dar, eine Verbindung zwischen Deckelelement und Spannkolben zu erzielen, da das Deckelelement hierbei einfach in die Ausnehmung eingesetzt wird. Hierbei kann das Deckelelement zusätzlich eingeklebt werden, um den Halt in der Ausnehmung zu verbessern. Eine zusätzliche Klebung stellt hierbei nur eine mögliche Art der zusätzlichen Verbindung dar, gleichermaßen kann auch das Deckelelement auch eingeschraubt oder eingeklippt, direkt eingespritzt oder anders befestigt werden.

Vorteilhafterweise weist das Deckelelement im Wesentlichen die Abmessung der Ausnehmung auf. Vorteilhafterweise kann das Deckelelement etwas größer ausgebildet sein, um durch Spannkraft in der Ausnehmung gehalten zu werden. Durch diese Ausführungsform werden weitere Maßnahmen, zum Beispiel Klebung, unnötig und so die Kosten weiter reduziert.

Gemäß einer weiteren bevorzugten Ausführungsform kann das Deckelelement als Scheibe ausgebildet sein. Aufgrund der Form des Kolbens bietet sich eine kreisförmige Ausnehmung, insbesondere hinsichtlich der Vereinfachung der Fertigung an, so dass sich hier die Form des Deckelelementes entsprechend ergibt.

Vorteilhafterweise können zwei Drittel der Höhe des Deckelelementes im Bereich der Ausnehmung des Spannkolbens aufgenommen werden. Ein Drittel der Höhe des Deckelelementes steht über die Stirnfläche des Spannkolbens über und bildet so die Andrückfläche. Hierbei reicht eine entsprechende Höhe aus, um einen Kontakt zwischen dem Spannkolben und der Spannschiene zu vermeiden. Gleichzeitig erhöht sich die Haltekraft des Deckelelementes in dem Spannkolben, da hier ein ausreichender Teil des Deckelelementes in den Spannkolben eingeführt ist, so dass ein ungewolltes Lösen des Deckelelementes von dem Spannkolben ausgeschlossen werden kann.

Gemäß einer weiteren bevorzugten Ausführungsform kann das Deckelelement mit einer Ausnehmung zur Aufnahme eines der Stimfläche des Spannkolbens zugeordneten Bereichs ausgebildet sein. Auch hierbei bietet sich wiederum eine kreisförmige Ausbildung des Deckelelementes sowie der Ausnehmung an. Im Gegensatz zu der vorhergehenden Ausführungsform, bei welcher das Deckelelement in den Spannkolben eingeführt wurde, wird das Deckelelement folglich bei der vorliegenden Ausführungsform auf den Spannkolben aufgesetzt. Auch diese Ausführungsform lässt sich einfach fertigen, und ermöglicht eine leichte Wartung wie auch Austausch des Deckelelementes. Diese Ausführungsform hat sich bewährt, da die Form des üblichen Spannkolbens unverändert bleibt.

Vorteilhafterweise kann die Stimfläche des Spannkolbens an dem Boden der Ausnehmung anliegen, und sich der durch die Ausnehmung ausgebildete kreisförmige Randsteg des Deckelelementes an die sich an die Stimfläche unmittelbar anschließende Außenwand des Spannkolbens anlegen. Das Deckelelement wird wie bereits beschrieben auf den Spannkolben aufgesetzt, hierbei wird bei Kontakt des Bodens der Ausnehmung und der Stirnfläche des Spannkolbens sichergestellt, dass das Deckelelement richtig auf dem Spannkolben aufsitzt. Das Deckelelement wird hierbei über den durch die Ausnehmung gebildeten Randsteg gehalten, welcher sich außen um den Spannkolben legt. Gleichzeitig bildet der Randsteg ein Schutzelement für den Spannkolben gegen Verschleiß.

Vorteilhafterweise kann die Höhe der Randstege wenigstens der halben Höhe des Deckelelementes entsprechen. In der Praxis haben sich diese Abmessungen bewährt, um einen sicheren Halt des Deckelementes auf dem Spannkolben sicherzustellen.

Vorteilhafterweise kann der Durchmesser, der in dem Deckelelement ausgebildeten Ausnehmung etwas kleiner sein als der Durchmesser der Stirnfläche des Spannkolbens. Wird ein entsprechend gefertigtes Deckelelement auf den Spannkolben aufgesetzt, kann das Deckelelement über die vorhandenen Druckverhältnisse auf dem Spannkolben gehalten werden.

Gemäß einer weiteren bevorzugten Ausführungsform kann die Andrückfläche mit einer ringsum abgefasten Kante ausgebildet sein. Auf diese Weise wird einem Verschleiß der Kante vorgebeugt, gleichzeitig wird der Kontakt zwischen der Andrückfläche und der Spannschiene verbessert.

Vorteilhafterweise kann der Spannkolben und das Deckelelement durch Formschluss, Kraftschluss oder Reibschluss miteinander verbunden werden. Diese Verfahren haben sich in der Praxis bewährt und kann beliebig ausgetauscht werden, z.B. unter Berücksichtigung der konkret eingesetzten Materialen um ein gute und dauerhafte Verbindung zu erzielen.

Im Folgenden wird ein Ausführungsbeispiel der vorliegenden Erfindung anhand einer Zeichnung näher erläutert. Es zeigen:
- Fig. 1: eine Aufsicht auf einen Spannkolben mit eingesetztem Deckelelement;
- Fig. 2: den in Fig. 1 dargestellten Spannkolben, im Schnitt entlang der Linie A-A aus Fig. 1:
- Fig. 3: eine Aufsicht auf einen Spannkolben mit aufgesetztem Deckelelement, und
- Fig. 4: den in Fig. 3 dargestellten Spannkolben im Schnitt entlang der Linie A-A aus Fig. 3.

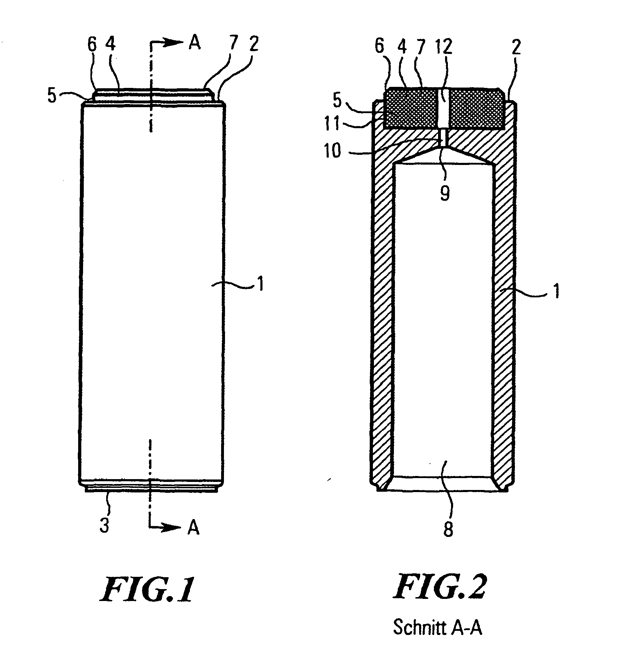

In Fig. 1 ist ein üblicher Spannkolben 1 mit Stirnfläche 2 sowie der der Stirnfläche gegenüberliegenden Fläche 3 ausgebildet. Im Betrieb wird ein entsprechender Spannkolben in ein Gehäuse solchermaßen eingeführt, dass die Stirnfläche 2 aus dem Gehäuse herausschaut.

In die Stirnfläche 2 des Spannkolbens 1 ist ein Deckelelement 4 eingesetzt. Hierbei erstreckt sich das Deckelelement 4 über die Stirnfläche 2 hinaus und umfasst einen sich über die Stirnfläche 2 hinaus erstreckenden Randbereich 5, eine abgefaste Kante 6 sowie die Andrückfläche 7, das heißt die Fläche, welche parallel zur Stimfläche 2 des Spannkolbens ausgebildet ist und im Einsatz gegen die Spannschiene drückt.

Der genaue Aufbau des Spannkolbens sowie des Deckelementes 4 wird aus Fig. 2 deutlich, welche eine Schnittansicht zeigt. Wie bereits bekannt, ist der Spannkolben 1 mit einer koaxialen Bohrung 8 versehen, in welche im Einsatz ein Führungsstift eingeführt wird. Die Bohrung ist hierbei mit einem kegelförmigen Ende in der Nähe der Stirnfläche 2 ausgebildet. Von der Spitze 9 des kegelförmigen Endes der Bohrung 8 aus erstreckt sich eine Entlüftungsöffnung 10 bis in die Stimfläche 2 hinein.

Die Stirnfläche ist mit einer kreisförmig ausgebildeten Ausnehmung versehen, so dass sich die Entlüftungsöffnung 10 in dem vorliegenden Fall bis in den Boden der Ausnehmung mündet.

In die Ausnehmung ist das Deckelelement 4 solchermaßen eingesetzt, dass die Ausnehmung vollständig von dem Deckelelement 4 ausgefüllt wird. Hierbei bezeichnet das Bezugszeichen 11 den Anteil des Deckelelementes, welcher innerhalb der Ausnehmung angeordnet ist. Es wird deutlich, dass ca. zwei Drittel der Höhe des Deckelelementes 4 von der Ausnehmung aufgenommen werden und sich lediglich ein Drittel über die Stimfläche 2 des Spannkolbens hinaus erstreckt. Das Deckelelement ist hier kreisförmig aus einem Kunststoff, insbesondere einem Polyamid, gefertigt.

In der Mitte des Deckelelementes ist eine Durchtrittsöffnung 12 ausgebildet, welche sich über die ganze Höhe des Deckelelementes 4 erstreckt und mittig in diesem angeordnet ist. Hierbei weist die Durchtrittsöffnung 12 einen etwas größeren Durchmesser als der Durchmesser der Entlüftungsöffnung 10 auf. Im zusammengesetzten Zustand ist die Durchtrittsöffnung 12 unmittelbar über der Entlüftungsöffnung 10 angeordnet, so dass eine durchgängige Öffnung zwischen der Bohrung 8 und des Spannkolbens und der Andrückfläche 7 des Deckelelementes gewährleistet ist. Da der Durchmesser der Durchtrittsöffnung 12 größer ausgebildet ist als der der Entlüftungsöffnung 10, wird hier eine problemlose Verbindung zwischen den beiden Öffnungen sichergestellt.

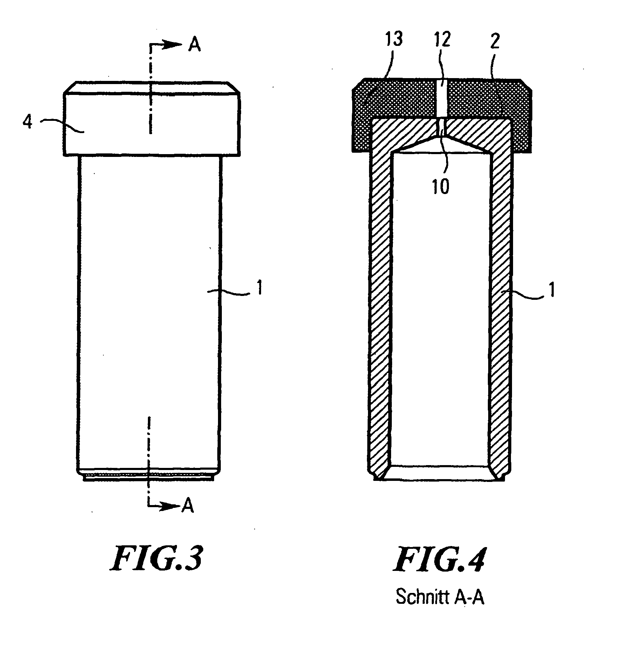

In Fig. 3 ist wiederum ein herkömmlicher Spannkolben 1 dargestellt, wobei im Bereich der Stirnfläche ein Deckelelement 4 auf den Spannkolben aufgesetzt ist, und diesen teilweise an seiner Außenwand umgibt. In der folgenden Beschreibung, insbesondere der Beschreibung hinsichtlich Fig. 4, werden identische Teile des Spannkolbens und des Deckelelementes mit den gleichen Bezugszeichen wie in den Fig. 1 und 2 versehen.

Der Aufbau des Spannkolbens entspricht dem Aufkolben des in Fig. 1 und 2 beschriebenen Spannkolbens und wird hier nicht wiederholt.

Im Gegensatz zu dem Deckelelement gemäß der Fig. 1 und 2, wird das Deckelelement gemäß dieser Ausführungsform, wie insbesondere im Hinblick auf Fig. 4 deutlich wird, auf den Spannkolben aufgesetzt, und umgibt einen Bereich der Außenwand des Spannkolbens. Das Deckelelement weist hierbei einen größeren Durchmesser als der Spannkolben 1 auf und ist mit einer Ausnehmung versehen, in welche die Stirnfläche 2 des Spannkolbens sowie ein Bereich der Außenwand eingeführt wird. Hierbei liegt die Stirnfläche 2 an dem Boden der Ausnehmung des Deckelelementes 4 an. Auch das aufgesetzte Deckelelement 4 ist mit einer Durchtrittsöffnung 12 versehen, um hier eine Fortsetzung der Entlüftungsöffnung 10 des Spannkolbens 1 zu gewährleisten.

Die Ausnehmung in dem Deckelelement 4 erstreckt sich wenigstens über die halbe Höhe, so dass die Höhe des durch die Ausnehmung gebildeten Randsteges 13 wenigstens der halben Höhe des gesamten Deckelelementes 4 entspricht. Hierdurch wird ein sicherer Halt des Deckelelementes auf dem Spannkolben gewährleistet.

## Patentansprüche

1. Spannvorrichtung für ein Endlostreibelement, insbesondere Steuerkette eines Verbrennungsmotors, umfassend eine mit dem Endlostreibelement in Wirkverbindung bringbare Spannschiene, einen in einem Gehäuse axial verschiebbar gelagerten auf die Spannschiene aufdrückender Spannkolben (1) und ein Deckelelement (4), welches sich über den Spannkolben (1) hinaus erstreckt und eine mit der Spannschiene im Eingriff stehende Andrückfläche (7) bildet, wobei eine Stimfläche (2) des Spannkolbens (1) mit dem Deckelelement (4) verbindbar ist, **dadurch gekennzeichnet, dass** die Stirnfläche (2) des Spannkolbens (1) eine Ausnehmung mit einem Boden zur Aufnahme des Deckelelements (4) aufweist.

2. Spannvorrichtung nach Anspruch 1, **dadurch gekennzeichnet, dass** das Deckelelement (4) des Spannkolbens (1) aus einem Kunststoff hergestellt ist.

3. Spannvorrichtung nach Anspruch 1 oder 2, **dadurch gekennzeichnet, dass** das Deckelelement (4) aus einem Thermoplasten, insbesondere einem Polyamid, besteht.

4. Spannvorrichtung nach wenigstens einem der Ansprüche 1 bis 3, **dadurch gekennzeichnet, dass** der Spannkolben (1) aus einem Metall hergestellt ist.

5. Spannvorrichtung nach wenigstens einem der Ansprüche 1 bis 4, **dadurch gekennzeichnet, dass** die Spannschiene zumindestens in dem Bereich, der mit der Andrückfläche (7) im Eingriff steht, aus einem metallischen Werkstoff besteht.

6. Spannvorrichtung nach wenigstens einem der Ansprüche 1 bis 5, **dadurch gekennzeichnet, dass** eine in dem oberen Bereich des Spannkolbens (1) ausgebildete und in der Stimfläche (2) mündende Entlüftungsöffnung (10) mit einer sich durch das Deckelelement (4) und in der Andrückfläche (7) in derselben mündenden Durchgangsöffnung (12) in Verbindung bringbar ist.

7. Spannvorrichtung nach Anspruch 6, **dadurch gekennzeichnet, dass** der Durchmesser der Durchgangsöffnung (12) des Deckelelementes (4) größer ist, als der Durchmesser der Entlüftungsöffnung (10) des Spannkolbens (1).

8. Spannvorrichtung nach Anspruch 1, **dadurch gekennzeichnet, dass** das Deckelelement wenigstens die Abmessung der Ausnehmung des Spannkolbens (1) aufweist und insbesondere etwas größer ausgebildet ist.

9. Spannvorrichtung nach wenigstens einem der Ansprüche 1 bis 8, **dadurch gekennzeichnet, dass** das Deckelelement (4) als Scheibe ausgebildet ist.

10. Spannvorrichtung nach wenigstens einem der Ansprüche 1 bis 9, **dadurch gekennzeichnet, dass** zwei Drittel der Höhe des Deckelementes (4) im Bereich der Ausnehmung des Spannkolbens (1) aufgenommen werden.

## Claims

1. A tensioning device for an endless drive element, in particular a timing chain of an internal combustion engine, comprising a tensioning rail which is adapted to be operatively connected to the endless drive element, and a tensioning piston (1), which is supported in a housing in an axially displaceable manner, as well as a cap element (4) extending beyond the tensioning piston (1) and forming a pressure face (7) which is in engagement with the tensioning rail, wherein an end face (2) of the tensioning piston (1) is attachable with the cap element (4), **characterized in that** the end face (2) of the tensioning piston (1) has formed therein a recess with a bottom for accommodating the cap element (4).

2. A tensioning device according to claim 1, **characterized in that** the cap element (4) of the tensioning piston (1) is made of plastic material.

3. A tensioning device according to claim 1 or 2, **characterized in that** the cap element (4) consists of a thermoplastic, in particular a polyamide.

4. A tensioning device according to at least one of the claims 1 to 3, **characterized in that** the tensioning piston (1) is made of metal.

5. A tensioning device according to at least one of the claims 1 to 4, **characterized in that** the tensioning rail consists of a metallic material, at least in the area which is engagement with the pressure face (7).

6. A tensioning device according to at least one of the claims 1 to 5, **characterized in that** a vent opening (10) formed in the upper area of the tensioning piston (1) and ending in the end face (2) is connectable to a passage opening (12) which extends through the cap element (4) and ends in the pressure face (7) of said cap element (4).

7. A tensioning device according to claim 6, **characterized in that** the diameter of the passage opening (12) of the cap element (4) is larger than the diameter of the vent opening (10) of the tensioning piston (1).

8. A tensioning device according to claim 1, **characterized in that** the dimensions of the cap element correspond at least to those of the recess of the tensioning piston (1) and that, in particular, they are slightly larger than those of said recess.

9. A tensioning device according to at least one of the claims 1 to 8, **characterized in that** the cap element (4) takes the form of a disk.

10. A tensioning device according to at least one of the claims 1 to 9, **characterized in that** two thirds of the height of the cap element (4) are accommodated in the area of the recess of the tensioning piston (1).

## Revendications

1. Dispositif tendeur pour un élément d'entraînement sans fin, en particulier la chaîne de distribution d'un moteur à combustion interne, comprenant un rail tendeur pouvant être amené en liaison d'action avec l'élément d'entraînement sans fin, un piston tendeur (1) monté de façon axialement coulissante dans un boîtier, faisant pression sur le rail tendeur, et un élément couvercle (4) s'étendant au-delà du piston tendeur (1) et formant une surface d'appui (7) en engagement avec le rail tendeur, une face frontale (2) du piston tendeur (1) pouvant être reliée à l'élément couvercle (4),
**caractérisé en ce que**
la face frontale (2) du piston tendeur (1) comporte un évidement ayant un fond destiné à recevoir l'élément couvercle (4).

2. Dispositif tendeur selon la revendication 1,
**caractérisé en ce que**
l'élément couvercle (4) du piston tendeur (1) est réalisé en une matière plastique.

3. Dispositif tendeur selon la revendication 1 ou 2,
**caractérisé en ce que**
l'élément couvercle (4) est fait en une matière thermoplastique, notamment en un polyamide.

4. Dispositif tendeur selon l'une au moins des revendications 1 à 3,
**caractérisé en ce que**
le piston tendeur (1) est réalisé en un métal.

5. Dispositif tendeur selon l'une au moins des revendications 1 à 4,
**caractérisé en ce que**
le rail tendeur est fait en un matériau métallique au moins au niveau de la zone qui est en contact avec la surface d'appui (7).

6. Dispositif tendeur selon l'une au moins des revendications 1 à 5
**caractérisé en ce que**
un trou de reniflard (10) conformé dans la partie supérieure du piston tendeur (1) et débouchant dans la face frontale (2) peut être amené en communication avec un trou débouchant (12) s'étendant à travers l'élément couvercle (4) et débouchant dans la surface d'appui (7) de celui-ci.

7. Dispositif tendeur selon la revendication 6,
**caractérisé en ce que**
le diamètre du trou débouchant (12) de l'élément couvercle (4) est supérieur au diamètre du trou reniflard (10) du piston tendeur (1).

8. Dispositif tendeur selon la revendication 1,
**caractérisé en ce que**
l'élément couvercle présente au moins la dimension de l'évidement du piston tendeur (1) et est notamment réalisé légèrement plus grand.

9. Dispositif tendeur selon l'une au moins des revendications 1 à 8,
**caractérisé en ce que**
l'élément couvercle (4) est réalisé sous forme d'une rondelle.

10. Dispositif tendeur selon l'une au moins des revendications 1 à 9,
**caractérisé en ce que**
deux tiers de la hauteur de l'élément couvercle (4) sont reçus au niveau de l'évidement du piston tendeur (1).
